# EUROPÄISCHE PATENTSCHRIFT

(11) **EP 1 600 375 B1**
(45) Veröffentlichungstag und Bekanntmachung des Hinweises auf die Patenterteilung: **01.10.2008**
(21) Anmeldenummer: 05004617.6
(22) Anmeldetag: 03.03.2005
(51) Int. Cl.: B64D 11/06, B60N 2/56, A47C 7/72

(54) **Sitz, insbesondere Fluggastsitz**
Seat, especially aircraft passenger seat
Siège, en particulier un siège passager pour avion

(30) Priorität: 27.05.2004 DE 102004026023
(43) Veröffentlichungstag der Anmeldung: 30.11.2005
(73) Patentinhaber: Recaro Aircraft Seating GmbH & Co. KG, 74523 Schwäbisch Hall (DE)
(72) Erfinder: Bauer, Jürgen, 71560 Sulzbach (DE)
(74) Vertreter: Daub, Thomas

(56) Entgegenhaltungen:
- EP-A- 0 763 466
- EP-A- 0 763 467
- WO-A-20/05047104
- DE-C1- 4 337 938
- US-A- 5 385 382
- US-A- 6 059 018
- US-A1- 2002 011 071

## Beschreibung

Die Erfindung bezieht sich auf einen Sitz, insbesondere Fluggastsitz, der Sitzkomponenten nämlich ein Sitzteil, eine von einer Rückenlehnenstruktur gehaltene Rückenlehne sowie Steuer- und Funktionselemente aufweist, gemäß der Merkmalsausgestaltung des Oberbegriffes des Patentanspruches 1.

Sitze vergleichbarer Art sind bekannt. In der DE-A-100 19 484 der Anmelderin ist beispielsweise ein derartiger Sitz in Form eines modernen Fluggastsitzes beschrieben. Bei solchen für längere Reisezeiten vorgesehenen Sitzen sind üblicherweise mehrere Steuer- und Funktionselemente vorhanden, die teilweise der Optimierung des dem Sitzbenutzer gebotenen Komforts dienen, teils auf den Flugbetrieb bezogene Funktionen erfüllen. Bei den den Komfort erhöhenden Elementen handelt es sich beispielsweise um Einstelleinrichtungen für bewegliche Sitzkomponenten, etwa zur Einstellung der Neigung der Rückenlehne und/oder einer Beinauflage. Des weiteren sind üblicherweise vom Sitzbenutzer betätigbare Einrichtungen zur Steuerung von Beleuchtungs-, Audio- oder Videoanlagen, Klimatisierungseinrichtungen und dergleichen vorhanden.

Der Einbau einer entsprechend großen Anzahl derartiger Sitzkomponenten führt zu einer verhältnismäßig komplexen Bauweise derartiger Sitze. Andererseits ist jedoch bei solchen, zur Personenbeförderung vorgesehenen Sitzen, speziell bei Fluggastsitzen für die gewerbliche Luftfahrt, eine kompakte, leichtgewichtige Bauweise von ausschlaggebender Bedeutung.

Durch die EP-A-0 763 467 ist eine Versorgungseinheit für Passagiere, insbesondere in einer Passagierkabine eines Flugzeuges bekannt, mit Komfort- und Bedienelementen, wie Leseleuchte, Stewardruftaste, Lautsprecher, Luftdüse, Sauerstoffmaske und -generator sowie optische Anzeigeelemente nebst Zuführleitungen zwischen einer Versorgungsleitung und der Versorgungseinheit. Die genannte Versorgungseinheit, die in Ergänzung eines jeden Passagiersitzes angeordnet und als Lehnenbügel ausgebildet ist, der zumindest teilweise die Rückenlehne umrahmt und ortsfest, vorzugsweise an einem Traggestell des Sitzes angebracht ist, dient als Hauptteil einer Rückenlehnenstruktur und weist in einem Hohlprofil des Lehnenbügels eine Führung auf, sowohl für elektrische Leitungen als auch für die Luftversorgung. Letztere mündet mit ihren Luftdüsen in einem Kopfelement des Sitzes aus, so dass eine Frischluftzufuhr im Bereich des Kopfes eines Sitzbenutzers stattfindet.

Durch die US-A-5 385 382 ist ein gattungsgemäßer Sitz für ein Kraftfahrzeug bekannt, der Sitzkomponenten nämlich ein Sitzteil, eine von einer Rückenlehnenstruktur gehaltene Rückenlehne sowie Steuer- und Funktionselemente aufweist, wobei zumindest ein Hauptteil der Rückenlehnenstruktur durch ein geschlossenes Hohlprofil mit mindestens zwei Schenkeln, die längs der Seitenränder der Rückenlehne verlaufen und die an einem oberen Randbereich der Rückenlehne mit einem quer verlaufenden Steg verbunden sind, gebildet ist, wobei ein innerer Hohlraum des Hohlprofiles als Führung für die Zufuhr von Energie in Form eines strömungsfähigen Mediums wie Luft, zu zumindest einem eine Energieversorgung benötigten Funktionselement in Form einer Luft-Austrittsdüse oder Steuerelement vorgesehen ist und wobei die Luft-Austrittsdüse an der Rückseite der Rückenlehne des Sitzes für den, bezogen auf die Reiserichtung (Flugrichtung), nach hinten gerichteten Luftaustritt vorgesehen ist. Bei der bekannten Lösung ist die Luft-Austrittsdüse mittig zwischen den beiden Längsrändern der Rückenlehne im oberen Rückenlehnenbereich vorgesehen, so dass der Luftstrom zentral auf einen rückwärtig im Fond des Fahrzeuges sitzenden Sitzbenutzer gerichtet ist.

Ausgehend von diesem Stand der Technik liegt der Erfindung die Aufgabe zugrunde, einen Sitz, insbesondere Fluggastsitz, zu schaffen, dessen Bauweise den Einbau betreffender Steuer- und/oder Funktionselemente erleichtert, ohne dass dies zu Lasten der Strukturfestigkeit des Sitzes geht. Eine dahingehende Aufgabe ist gelöst durch die Merkmale des Patentanspruches 1 in seiner Gesamtheit.

Dadurch, dass gemäß dem kennzeichnenden Teil des Patentanspruches 1 am oberen Randbereich der Rückenlehne sich eine seitliche Auskragung befindet, die die Luft-Austrittsdüse trägt, die über eine Abzweigung an den oberen Quersteg des Hohlprofiles luftführend angeschlossen ist, ist ein Strukturelement, das als unabdingbarer Bestandteil der Sitzkonstruktion ohnehin vorhanden ist, in Zusatzfunktion als Energieführung zur Versorgung von Funktions- und/oder Steuerelementen des Sitzes ausgenutzt, woraus sich eine Vereinfachung der Gestaltung der in den Sitz zu integrierenden Komponenten ergibt. Die Ausnutzung des inneren Hohlraumes des Hohlprofiles der Rückenlehnenstruktur als Führung zur Energieübertragung auf seitlich der Rückenlehne auskragende angeschlossene Elemente führt zudem zu keinerlei struktureller Schwächung des Hohlprofiles, d. h. der Rükkenlehnenstruktur, so dass die bauliche Vereinfachung nicht zu Lasten der Strukturfestigkeit geht, wie sie bei derartigen Sitzen zur Aufnahme der in einem Crashfall auftretenden Kräfte verlangt ist.

Der innere Hohlraum des Hohlprofiles kann als Führung für Leitungen zur Übertragung elektrischer und/oder mechanischer Energie auf elektrische bzw. mechanische Funktions- oder Steuerelemente vorgesehen sein.

Hierbei kann an einem der Schenkel des Rahmenteils im Bereich seines unteren, dem Sitzteil benachbarten Ende eine ins Innere des Hohlprofiles führende Öffnung für den Anschluß einer Luftquelle vorgesehen sein. Dabei kann es sich um eine am Sitzteil unterhalb der Sitzfläche gelegene Luftpumpe handeln, vorzugsweise um ein elektromotorisch betätigbares Radialgebläse, dessen Ausgangsseite über eine Schlauchleitung mit der Öffnung am Schenkel des Rahmenteiles verbunden ist.

Nachstehend ist die Erfindung anhand eines in der Zeichnung dargestellten Ausführungsbeispieles im einzelnen erläutert. Es zeigen:
- Fig. 1 eine perspektivische Schrägansicht einer zur Bestuhlung eines Luftfahrzeuges gehörenden Sitzreihe mit drei Sitzen gemäß dem hier zu beschreibenden Ausführungsbeispiel der Erfindung;
- Fig. 2 eine Rückansicht der Sitzreihe von Fig. 1 und
- Fig. 3 eine stark schematisch vereinfacht gezeichnete perspektivische Darstellung lediglich einiger Strukturelemente und innerer Bauelemente des Ausführungsbeispieles.

Nachstehend ist die Erfindung beispielhaft anhand eines Fluggastsitzes beschrieben. Die erfindungsgemäße Lösung braucht jedoch nicht auf die Verwendung bei Fluggastsitzen beschränkt zu sein, sondern kann dem Grunde nach bei jedem Sitz, auch im Bereich von Land- oder Seefahrzeugen, Anwendung finden.

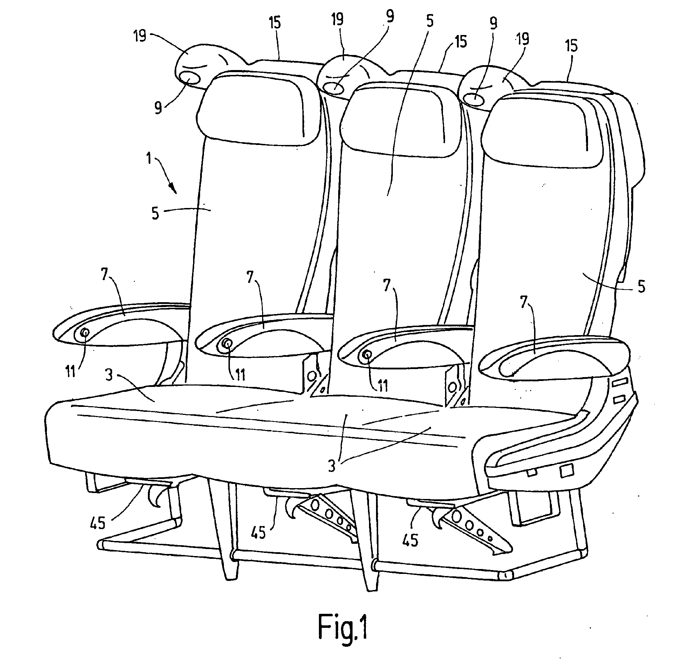

Die Fig. 1 zeigt in schematisch vereinfachter Darstellung eine Sitzreihe 1, die Teil der Bestuhlung eines Luftfahrzeuges für die gewerbliche Luftfahrt bildet und die drei nebeneinander liegende Sitze enthält, die jeweils dem hier zu beschreibenden Ausführungsbeispiel der Erfindung entsprechen. Die Fig. 1 zeigt die Sitzreihe 1 gesehen schräg von vorne. Die Sitzteile der Sitze sind jeweils mit der Bezugszahl 3 bezeichnet. Die mit 5 bezeichneten Rückenlehnen sind in ihrer Neigung relativ zum Sitzteil 3 mittels eines Neigungsmechanismus einstellbar, der nicht dargestellt ist und der vom Sitzbenutzer durch Betätigen einer Drucktaste 11 steuerbar ist, die sich an einer Armauflage 7 befindet, die sich, eine seitliche Begrenzung des betreffenden Sitzbereiches bildend, in Längsrichtung erstreckt und gegebenenfalls schwenkbar oder abklappbar gelagert sein kann. Am oberen Rand 15 der Rückenlehne 5 befindet sich jeweils eine seitliche Auskragung 19, an der sich ein schräg nach unten gerichtetes Leselicht 9 befindet. Ein Staufach für eine Schwimmweste, die sich in der bei Fluggastsitzen üblichen Art unterhalb des Sitzteiles 3 befindet, ist mit 45 bezeichnet.

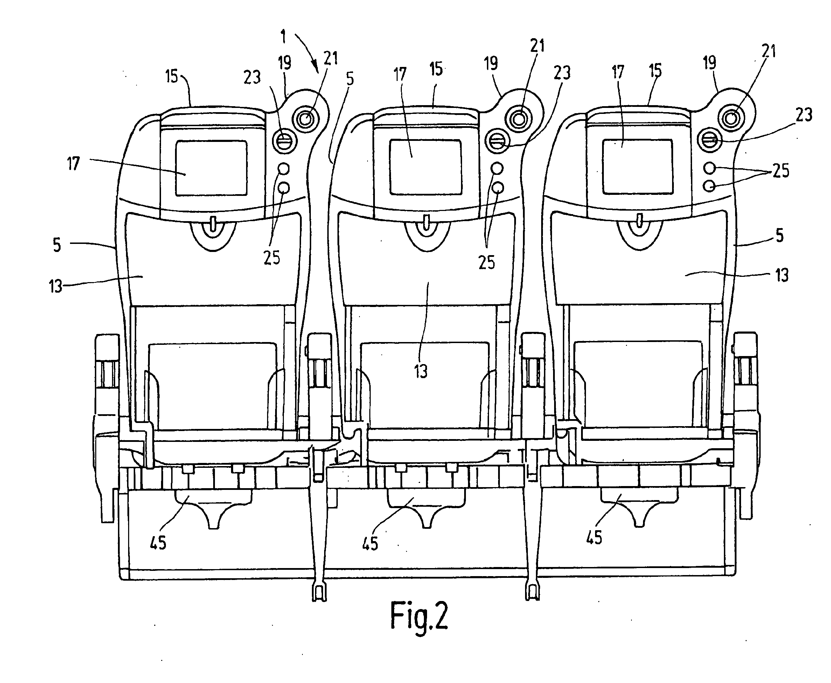

Die Fig. 2 zeigt in schematisierter Darstellung den Blick auf die Rückseite der Sitzreihe 1 von Fig. 1. In der bei Fluggastsitzen üblichen Weise befindet sich an der Rückseite der Rückenlehne 5 eine klappbare Tischplatte 13. Ein Flachbildschirm 17, der sich zwischen dem oberen Rand 15 der Rückenlehne 5 und der Tischplatte 13 befindet, ist mit 17 bezeichnet. Die Auskragung 19, die an ihrer Vorderseite das Leselicht 9 aufweist, trägt an ihrer in Fig. 2 zu sehenden Rückseite eine Frischluft-Austrittsdüse 21. Schräg unterhalb der Austrittsdüse 21 ist ein Drehschalter 23 angeordnet, mittels dem der Luftaustritt aus der Austrittsdüse 21 steuerbar ist. Unterhalb des Drehschalters 23 befindliche Anzeigeelemente, die den Flugbetrieb betreffende Anzeigen liefern, sind mit 25 bezeichnet.

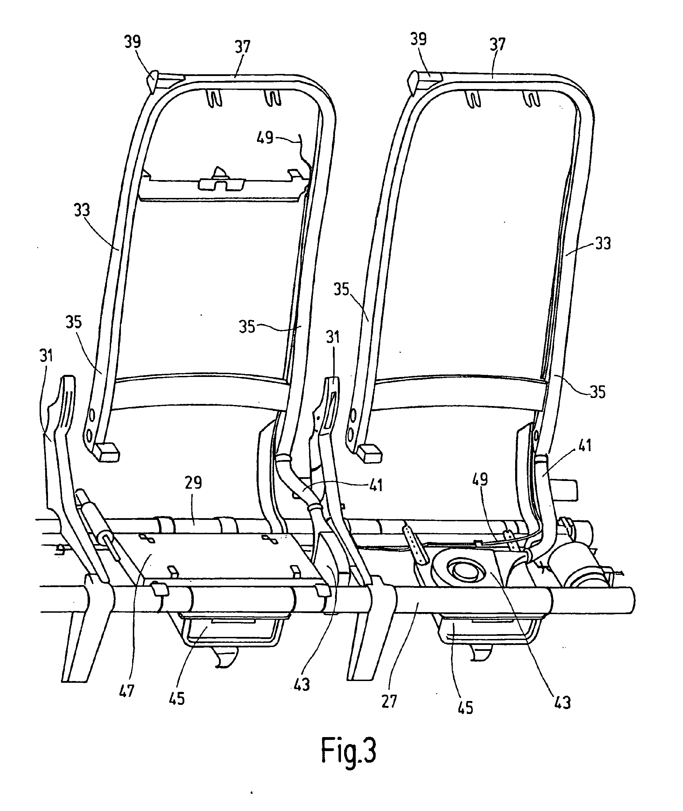

Fig. 3 verdeutlicht die Energiezufuhr für die Versorgung der Austrittsdüse 21 mit Frischluft. In Fig. 3 sind der Übersichtlichkeit halber lediglich die zur Erläuterung des erfindungsgemäßen Lösungsprinzips erforderlichen Bauelemente dargestellt, nämlich ein auf dem Kabinenboden aufgeständerter, rohrförmiger Haupt-Querträger 27, ein hinterer Querträger 29, die die Lagerung für das nicht gezeigte Sitzteil bilden, sowie Längsträger 31, von denen lediglich das dem in Fig. 3 linksseitig gelegenen Sitz zugeordnete Paar gezeigt ist und an denen die Rückenlehne neigungsverstellbar gelagert ist (Lagerungseinrichtung nicht gezeigt).

Die Rückenlehnenstruktur weist ein einstückiges, ein geschlossenes Hohlprofil aufweisendes, U-förmig gebogenes Rahmenteil 33 auf, mit längs verlaufenden Schenkeln 35 und einem diese verbindenden Quersteg 37 am oberen Rand 15 der Rückenlehne. Der innere Hohlraum des Hohlprofiles des Rahmenteiles 33 bildet eine Rohrleitung, über die die Austrittsdüse 21 mit Luft versorgt wird. Zu diesem Zweck befindet sich am oberen Quersteg 37 seitlich eine Abzweigung 39, über die Luft aus dem Hohlraum des Hohlprofiles austritt und über die Abzweigung 39 zu der Austrittsdüse 21, unter Zwischenschaltung eines durch den Schalter 23 betätigbaren Steuerventiles (nicht gezeigt), zuführbar ist. Der Eintritt der Luft erfolgt am unteren Ende des in Fig. 3 rechtsseitig gelegenen Schenkels 35 des Rahmenteiles 33 über eine Anschlußöffnung, mit der eine Schlauchleitung 41 verbunden ist, die zur Austrittsseite einer Luftpumpe in Form eines elektromotorisch betätigbaren Radialgebläses 43 führt.

Bei dem in Fig. 3 rechts gelegenen Sitz befindet sich das Gebläse 43 unterhalb der Sitzfläche im mittigen Bereich oberhalb des in üblicher Weise an der Unterseite des Sitzes angeordneten Staufaches 45 für eine Schwimmweste. Diese Anordnung des Gebläses 43 ist nicht zwingend. Je nach baulichen Gegebenheiten kann das Gebläse 43 auch seitlich des Zentralbereiches eingebaut sein, so dass der Zentralbereich gegebenenfalls für eine elektrische und/oder elektronische Einrichtung 47 zur Verfügung steht, die über eine Verkabelung 49 mit entsprechenden elektrischen/elektronischen Einrichtungen in Verbindung steht, beispielsweise Bildschirm, Audio-, Beleuchtungssystem und dergleichen.

Bei dem hier beschriebenen Ausführungsbeispiel ist der innere Hohlraum des das Rahmenteil 33 bildenden Hohlprofiles als Luftführung genutzt, während die Übertragung elektrischer Energie mittels gesonderter Verkabelung 49 erfolgt. Es versteht sich, dass die innere Führung des Hohlprofiles auch als Durchführung für elektrische Leitungen an Stelle der Verwendung als Luftführung oder zusätzlich hierzu genutzt werden könnte. Des weiteren kann die Führung mechanischer Energie in den Hohlprofilen, beispielsweise mittels Betätigungskabeln oder Bowdenzügen, vorgesehen sein.

An Stelle der Versorgung der Austrittsdüsen 21 mit Frischluft, die mittels des zugeordneten Gebläses 43 vom Bereich unterhalb des Sitzteiles 3 angesaugt und der Düse 21 zugeführt wird, könnte die Versorgung der Austrittsdüse 21 über das Hohlprofil des Rahmenteiles 33 auch von einer zentralen Klimatisieranlage des betreffenden Fahrzeuges/Luftfahrzeuges erfolgen, beispielsweise indem die Zufuhr über das Rohr des Haupt-Querträgers 27 erfolgt, von wo über flexible Abzweigleitung die Luftzufuhr zum Hohlprofil des Rahmenteiles 33 erfolgen könnte.

Vorzugsweise ist das das Rahmenteil 33 bildende Hohlprofil durch ein übliches Strangpreßverfahren hergestellt. Bei Verwendung als Leitung für Luft ist der innere Hohlraum des Profiles selbstredend mit Ausnahme der Lufteintrittsstelle und der Luftaustrittsstelle (Abzweigung 39) abgedichted.

## Patentansprüche

1. Sitz, insbesondere Fluggastsitz, der Sitzkomponenten nämlich ein Sitzteil (3), eine von einer Rückenlehnenstruktur (33) gehaltene Rückenlehne (5) sowie Steuer(23)- und Funktionselemente (21) aufweist, wobei zumindest ein Hauptteil der Rückenlehnenstruktur durch ein geschlossenes Hohlprofil (33), welches durch ein einstückiges, U-förmig gebogenes Rahmenteil (33) gebildet ist, dessen Schenkel (35) längs der Seitenränder der zugehörigen Rükkenlehne (5) verlaufen und dessen die Schenkel (35) verbindender, quer verlaufender Steg (37) dem oberen Randbereich (15) der Rückenlehne (5) zugeordnet ist, gebildet ist, wobei der innere Hohlraum des Hohlprofiles (33) als Leitung für die Zufuhr von Luft zu einer Luft-Austrittsdüse (21) vorgesehen ist, und wobei die Luft-Austrittsdüse (21) an der Rückseite der Rückenlehne (5) des Sitzes für den, bezogen auf die Reiserichtung, nach hinten gerichteten Luftaustritt vorgesehen ist, **dadurch gekennzeichnet, dass** am oberen Randbereich (15) der Rückenlehne sich eine seitliche Auskragung (19) befindet, die die Luft-Austrittsdüse (21) trägt, die über eine Abzweigung (39) an den oberen Quersteg (37) des Hohlprofiles (33) luftführend angeschlossen ist.

2. Sitz nach Anspruch 1, **dadurch gekennzeichnet, dass** der innere Hohlraum des Hohlprofiles (33) als Führung für Leitungen zur Übertragung elektrischer und/oder mechanischer Energie auf elektrische bzw. mechanische Funktions- oder Steuerelemente vorgesehen ist.

3. Sitz nach Anspruch 1 oder 2, **dadurch gekennzeichnet, dass** einer der Schenkel (35) des Rahmenteils (33) im Bereich seines unteren, dem Sitzteil (33) benachbarten Ende eine ins Innere des Hohlprofiles (33) führende Öffnung für den Anschluß einer Luftquelle (43) aufweist.

4. Sitz nach einem der Ansprüche 1 bis 3, **dadurch gekennzeichnet, dass** der Luftaustritt aus der Düse (21) mittels eines an der Rückseite der Rückenlehne (5) befindlichen Steuerelementes (23) steuerbar ist.

5. Sitz nach einem der Ansprüche 1 bis 4, **dadurch gekennzeichnet, dass** eine Luftquelle (43), die am Sitzteil (3) unterhalb der Sitzfläche gelegen ist, über eine flexible Leitung (41) mit dem Innenraum des Hohlprofiles (33) verbunden ist.

6. Sitz nach Anspruch 5, **dadurch gekennzeichnet, dass** als Luftquelle ein elektromotorisch betätigbares Radialgebläse (43) vorgesehen ist, dessen Ausgangsseite über eine Schlauchleitung (41) mit dem inneren Hohlraum des Hohlprofiles (33) verbunden ist.

## Claims

1. Seat, especially aircraft passenger seat, which has seat components, namely a seat part (3), a back rest (5) which is held by a back rest structure (33), and control elements (23) and functional elements (21), wherein at least a main part of the back rest structure is formed by a closed hollow profile (33) which is formed by a single-piece frame part (33) which is bent in a U-shaped manner and the legs (35) of which run along the side edges of the associated back rest (5) and the web (37) of which, the web connecting the legs (35) and running transversely, is assigned to the upper edge region (15) of the back rest (5), wherein the inner cavity of the hollow profile (33) is provided as a line for the supply of air to an air outlet nozzle (21), and wherein the air outlet nozzle (21) is provided on the rear side of the back rest (5) of the seat for the outlet of air in a rearward direction, with respect to the direction of travel, **characterized in that** a lateral projection (19) is located on the upper edge region (15) of the back rest, said projection bearing the air outlet nozzle (21) which is connected via a junction (39) to the upper transverse web (37) of the hollow profile (33) in an air-conducting manner.

2. Seat according to Claim 1, **characterized in that** the inner cavity of the hollow profile (33) is provided as a guide for lines for transmitting electric and/or mechanical energy to electric and/or mechanical functional or control elements.

3. Seat according to Claim 1 or 2, **characterized in that** one of the legs (35) of the frame part (33) has, in the region of its lower end adjacent to the seat part (33), an opening which leads into the interior of the hollow profile (33) and is intended for the connection of an air source (43).

4. Seat according to one of Claims 1 to 3, **characterized in that** the outlet of air from the nozzle (21) can be controlled by means of a control element (23) located on the rear side of the back rest (5).

5. Seat according to one of Claims 1 to 4, **characterized in that** an air source (43) which is situated on the seat part (3) below the seat surface is connected to the interior of the hollow profile (33) via a flexible line (41).

6. Seat according to Claim 5, **characterized in that** a radial fan (43) is provided as the air source, which radial fan can be actuated by electric motor and the output side of which is connected to the interior cavity of the hollow profile (33) via a hose line (41).

## Revendications

1. Siège, notamment siège passager pour avion, qui comprend des composants de siège, notamment une partie de siège (3), un dossier (5) soutenu par une structure de dossier (33) ainsi que des éléments de commande (23) et des éléments fonctionnels (21), au moins une partie principale de la structure de dossier étant formée par un profilé creux (33) fermé formé par une partie d'encadrement (33) incurvée en U réalisée d'un seul tenant dont les côtés (35) s'étendent le long des bords latéraux du dossier (5) correspondant et dont l'étai (37) reliant les côtés (35) et s'étendant transversalement est associé à la zone de bordure (15) supérieure du dossier (5), l'espace creux intérieur du profilé creux (33) étant conçu comme une conduite pour l'amenée d'air jusqu'à une buse de sortie d'air (21), et la buse de sortie d'air (21) étant réalisée au niveau du côté arrière du dossier (5) du siège pour la sortie d'air orientée vers l'arrière, par rapport au sens de la marche, **caractérisé en ce qu'**une avancée (19) latérale est disposée au niveau de la zone de bordure (15) du dossier, ladite avancée (19) supportant la buse de sortie d'air (21) raccordée par l'intermédiaire d'un embranchement (39) à l'étai transversal (37) du profilé creux (33) de façon à laisser passer l'air.

2. Siège selon la revendication 1, **caractérisé en ce que** l'espace creux intérieur du profilé creux (33) sert de guide aux conduites pour transmettre l'énergie électrique et/ou mécanique à des éléments de commande ou à des éléments fonctionnels électriques et/ou mécaniques.

3. Siège selon la revendication 1 ou 2, **caractérisé en ce qu'**un des côtés (35) de la partie d'encadrement (33) comporte, dans la zone de son extrémité inférieure connexe à la partie de siège (33), une ouverture conduisant à l'intérieur du profilé creux (33) pour le raccordement à une source d'air (43).

4. Siège selon l'une quelconque des revendications 1 à 3, **caractérisé en ce que** la sortie d'air de la buse (21) peut être commandée à l'aide d'un élément de commande (23) situé au niveau du côté arrière du dossier (5).

5. Siège selon l'une quelconque des revendications 1 à 4, **caractérisé en ce qu'**une source d'air (43), disposée au niveau de la partie de siège (3) et située en dessous de la surface de siège, est reliée à l'intérieur du profilé creux (33) par l'intermédiaire d'une conduite flexible (41).

6. Siège selon la revendication 5, **caractérisé en ce que** la source d'air prévue est une soufflante radiale (43) pouvant être actionnée de façon électromotrice, dont le côté de sortie est relié à l'espace creux intérieur du profilé creux (33) par l'intermédiaire d'une conduite en forme de boyau (41).
